# EUROPEAN PATENT SPECIFICATION

(11) **EP 3 417 703 B1**
(45) Date of publication and mention of the grant of the patent: **06.05.2020**
(21) Application number: 17180395.0
(22) Date of filing: 07.07.2017
(51) Int. Cl.: A01K 97/00, A01K 79/00, A01K 91/02, A01K 97/02, B64D 1/00, G05D 1/00

(54) **AN UNMANNED AERIAL VEHICLE FOR FISHING**
UNBEMANNTES LUFTFAHRZEUG ZUM FISCHEN
VÉHICULE AÉRIEN SANS ÉQUIPAGE POUR LA PÊCHE

(30) Priority: 21.06.2017 CN 201710477041
(43) Date of publication of application: 26.12.2018
(73) Proprietor: Ningbo Pelican Drone Co., Ltd., Ningbo Zhejiang 315800 (CN)
(72) Inventor: GAN, Tao, Melbourne, Victoria 3127 (AU)
(74) Representative: Patentanwälte Gierlich & Pischitzis Partnerschaft mbB

(56) References cited:
- CN-A- 106 305 643
- CN-A- 106 809 390
- CN-U- 203 387 114

## Description

### Technical Field

The present disclosure relates to an unmanned aerial vehicle (UAV), and more particularly, to an UAV for fishing.

### Background

Identifying locations of fish in seas, rivers or lakes may prove difficult for a fishing participator. The fishing participator would be less efficient if he or she fails to fish in a location where large flocks of fish tend to gather. In particular, it is also difficult to deploy a fishhook to a designated destination over sea due to a large fishing area of choice.

CN 106 305 643 A discloses a UAV for fishing with a fish hook delivery device, which is fixed to the lower part, and in which the fish hook is released by sliding back a latch fixed in an U-shaped arm.

### Summary

The present disclosure discloses an unmanned aerial vehicle (UAV), comprising a housing, said housing having a top part and a bottom part, a plurality of arms arranged on the top part, each arm having a motor and an airscrew, a battery unit arranged within the housing, a processor arranged within the housing, a launching unit having a slide bar and a driving component, and a supporting component arranged on the housing to support the slide bar. One end the slide bar is rotatably connected to a pivot. The other end of the slide bar is slidably connected to the supporting component. The driving component is to actuate one of the slide bar and the supporting component to separate the slide bar from the supporting component. The slide bar is to rotate about the pivot after separating from the supporting component.

In some embodiments, the bottom part further comprises a first sliding groove, the pivot is slidably connected within the first sliding groove, and the driving component is to actuate the pivot to slide within the first sliding groove until a displacement of the slide bar causes separation of the slide bar from the supporting component.

In some embodiments, the driving component further comprises a linking shaft, a motor and a swing arm fixed to the driving shaft of the motor, and the two ends of the linking shaft are connected to the swing arm and the pivot, respectively.

The supporting component is slidably connected to the housing in a direction perpendicular to the slide bar, a round corner which is in contact with the slide bar is arranged on the supporting component, and an elastic component is arranged between the supporting component and the housing.

In some embodiments, a second sliding groove is arranged on the bottom part, the supporting component is slidably connected within the second sliding groove, and the driving component is to actuate the supporting component to slide within the second sliding groove until a displacement of the supporting bar causes separation of the slide bar from the supporting component.

In some embodiments, the supporting component is rotatably connected to the bottom part, and the driving component is to actuate the supporting component to rotate until a rotation of the supporting component causes separation of the slide bar from the supporting component.

In some embodiments, the driving component further comprises a linking shaft, a motor and a swing arm fixed to the driving shaft of the motor, and the two ends of the linking shaft are connected to the swing arm and the supporting component, respectively.

In some embodiments, the motor is fixed to the inner wall of the bottom part, and a via for the swing arm to pass through is arranged on the bottom part.

In some embodiments, the launching unit comprises a pedestal fixed to the bottom part, a first bump and a second bump are arranged on the two sides of the pedestal respectively, the first sliding groove is arranged on the first bump, and the supporting component is arranged on the second bump.

In some embodiments, the pedestal comprises a plurality of finlets, and each finlet has a cut which engages with the slide bar.

Embodiments of the present disclosure alleviate at least some of the problems of prior arts by providing a more effective UAV in situations of fishing.

### Brief Description of the Drawings

The present disclosure is illustrated by way of example and not limitation in the figures of the accompanying drawing, in which:
Figure 1 illustrates a flowchart of a non-claimed method of using an UAV to fish according to an embodiment of the present disclosure.
Figure 2 illustrates a top view of an UAV according to an embodiment of the present disclosure.
Figure 3 illustrates a bottom view of an UAV according to an embodiment of the present disclosure.
Figure 4 illustrates an enlarged view of the part A in Figure 3.
Figure 5 illustrates an exploded view of an UAV according to an embodiment of the present disclosure.
Figure 6 illustrates an exploded view of a positioning unit of an UAV according to an embodiment of the present disclosure.
Figure 7 illustrates part of a positioning unit of an UAV according to an embodiment of the present disclosure.
Figure 8 illustrates a launching unit of an UAV according to an embodiment of the present disclosure.
Figure 9 illustrates a fishhook unit of an UAV according to an embodiment of the present disclosure.
Figure 10 illustrates a sonar unit of an UAV according to an embodiment of the present disclosure. Reference Numbers

1, housing; 11, mounting groove; 2, sonar unit; 3, fishhook unit; 4, launching unit; 5, positioning unit; 51, fixing shell; 52, power component; 53, back shell; 54, roller; 55, linking component; 56, lid; 57, supporting plate; 58, first microswitch; 59, second microswitch; 6, slide bar; 7, supporting component; 8, sliding groove.

### Detailed Description

Various aspects of the illustrative embodiments of the present disclosure will be described herein using terms commonly employed by those skilled in the art. However, it will be apparent to those skilled in the art that alternate embodiments may be practiced with only some of the described aspects. For purposes of explanation, specific numbers, materials and configurations are set forth in order to provide a thorough understanding of the illustrative embodiments. It will be apparent that alternate embodiments may be practiced without the specific details. In other instances, well-known features are omitted or simplified in order not to obscure the illustrative embodiments.

It will be understood that, although the terms first, second, third, etc. may be used herein to describe various elements, these elements should not be limited by these terms to indicate or imply any relative importance. These terms are only used to distinguish one element from another. For example, a first element could be termed a second element without departing from the scope of the present disclosure. The terms center, upper, lower, left, right, vertical, lateral, inner, outer, etc. may indicate directions or positions as illustrated in some of the drawings. These terms are only used in order not to obscure the description, and should not be construed as an indication of particular positional relation or sequence. As used herein, the term and/or includes any and all combinations of one or more of the associated listed items. The terms connected, coupled or any variant thereof means any connection or coupling either direct or indirect between two or more elements. Such a coupling or connection between the elements can be physical, electrical, logical or a combination thereof.

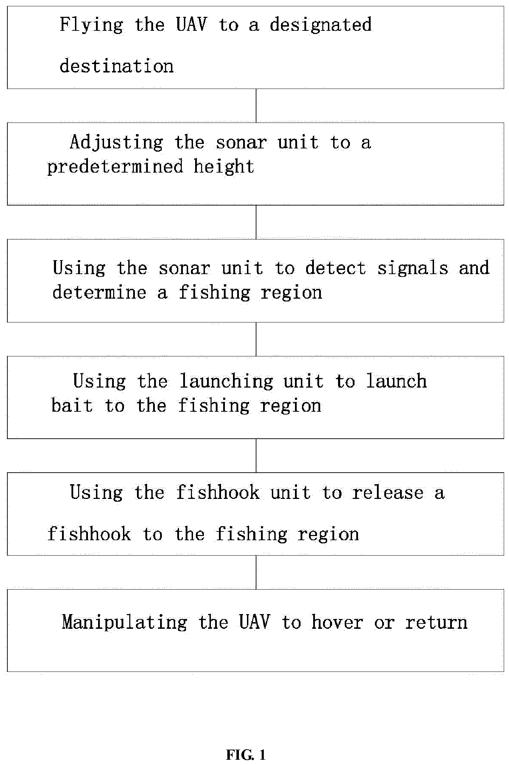

Figure 1 illustrates a flow chart of non-claimed method steps according to embodiments implementing an UAV in fishing. A processor of the UAV controls the UAV to fly to any designated destination based on instructions received or preset program. The designated destination may be an actual geographical area or location determined by a manual user or a preset program. For example, the designated destination may be an area of 10m^{∗}10m determined by GPS signal, or a specific geographical spot reached through multiple flying instructions. In an embodiment, the designated destination is determined before guiding the UAV with GPS navigation thereto. In an embodiment, an operator of the UAV sends the UAV to a destination he or she prefers by providing a series of manual flying instructions.

The positioning unit 5 adjusts the height of the sonar unit to a predetermined height by raising or lowering the sonar unit. In an embodiment, the sonar unit is mounted on positioning unit 5. The positioning unit 5 releases the sonar unit from the UAV before fishing and retracts the sonar unit from water surface after fishing by using a wire. The predetermined height can be 8-10m deep underwater. In an embodiment, the sonar unit reaches the predetermined height using feedback from a distance sensor. In an embodiment, an operator of the UAV provides manual lifting or diving instructions to the positioning unit 5 in real time until the sonar unit reaches the predetermined height. Further, the sonar unit can comprise a floater which floats above water surface and a sonar main body. The floater is connected with the sonar main body by a linking component 55 comprising a non-extendable rope or multiple connected segments of flexible rope. Assuming the predetermined height is 8-10m deep underwater, the length of the linking component 55 can be configured 8-10m. In an embodiment where the linking component 55 is 9m long, the sonar main body would stay at the predetermined height of 9m underwater while the floater remains on water surface. In an embodiment, real-time images of the floater on water surface can be provided as a feedback. In an embodiment, a force sensor is provided between the positioning unit 5 and the sonar unit to detect the tension on the wire which connects the sonar unit to the positioning unit 5. If the force sensor senses the tension associated with releasing and retracting of the sonar unit is less than a predetermined threshold, the floater is estimated to be floating on water surface and the sonar unit is estimated to have reached the predetermined height.

The sonar unit sends multiple signals to the processor about its ambient objects. The coordinates near the sonar unit will be determined as a fishing region if the signals are consistent with predetermined information regarding characteristics of presence of fish. For example, potential targets at multiple coordinates are compared in aspects such as the number and size thereof. The coordinates where preferred results are detected are chosen as the fishing region. The fishing region can also be determined by comparing detected results with preset values or thresholds.

After the fishing region is determined, a fishhook on the fishhook unit 3 is released to the fishing region without a need to do so manually. This one-step approach would improve accuracy of the deployment of the fishhook in the fishing region. Real-time images of the fishhook in water can be provided as a feedback. It is also possible to provide a force sensor which senses the tension between the fishhook and the fishhook unit 3. The fishhook is estimated to have been under water if the tension between the fishhook and the fishhook unit 3 becomes less than a predetermined threshold.

Since the sonar unit can detect potential targets in a designated destination after it reaches the predetermined height, a favorable fishing region with the most targets can be determined by comparing detected signals. Deploying bait in the specific fishing region can further enhance the number and activity level of potential targets within. Thereby more efficient fishing can be achieved.

The bait and/or fishhook can be attached to the UAV in various ways. In one embodiment, the bait and the fishhook are hung to the launching unit 4 and the fishhook unit 3 respectively before the UAV flies to the designated destination. Therefore, the UAV would not need to return during fishing. The actions of launching the bait and releasing the fishhook can be performed faster. In one embodiment, the bait is hung to the launching unit 4 before the UAV flies to the designated destination. The fishhook is hung to the fishhook unit 3 after the UAV return from deploying of the bait. Since there is no need to retrieve the bait, the bait can be carried by the UAV before any detection is performed and launched as soon as the fishing region is determined. Efficiency of bait deploying can be improved using this approach. The fish wire connecting the fishhook could get caught on obstacles when the UAV travels to various destinations, resulting in difficulty in retrieving the fish wire or the fishhook. To reduce the probability of such occasions, having the UAV return to retrieve the fishhook after determining the fishing region will help. In an embodiment, the UAV returns with the fishhook fixing to the fishhook unit 3 after the coordinates corresponding to signals detected by the sonar unit are determined as the fishing region. Reducing the weight of load carried by the UAV during sonar detection reduces energy cost. This will extend the performance time of the UAV especially when a long time is spent over detecting too many coordinates.

After the fishhook unit 3 releases the fishhook to the fishing area, the positioning unit 5 maintains the sonar unit at the predetermined height. The sonar unit 2 performs detecting and sends the detected signals to the processor of the UAV at a predetermined interval. That is to say, the sonar unit 2 continuously detects its ambient objects during fishing and estimates the change of potential targets. The estimated change of potential targets is used to determine whether a new fishing region should be selected. Further, a series of thresholds can be prepared. For example, the UAV can move to other coordinates near the fishing region if the detected signal falls below a certain threshold. Upon comparing signals detected from these coordinates with the signal detected in the original fishing region, the processor determines whether or not it is necessary to move to other coordinates. If the detected signal falls below a minimal threshold, the processor manipulates the UAV to fly to a new designated destination according to one of a received wireless communication and a preset program so that a new instance of fishing can start.

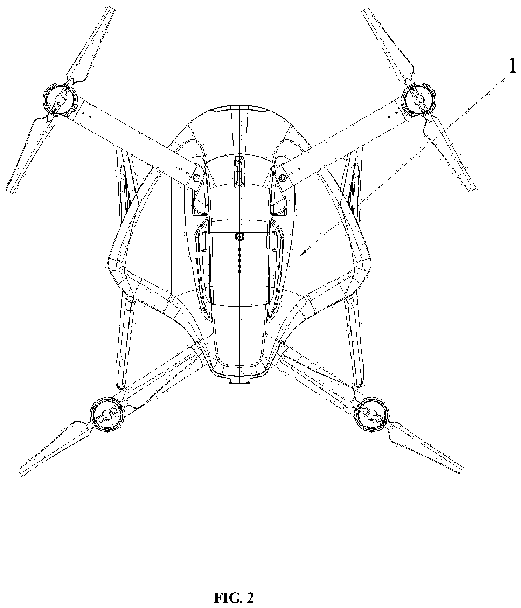

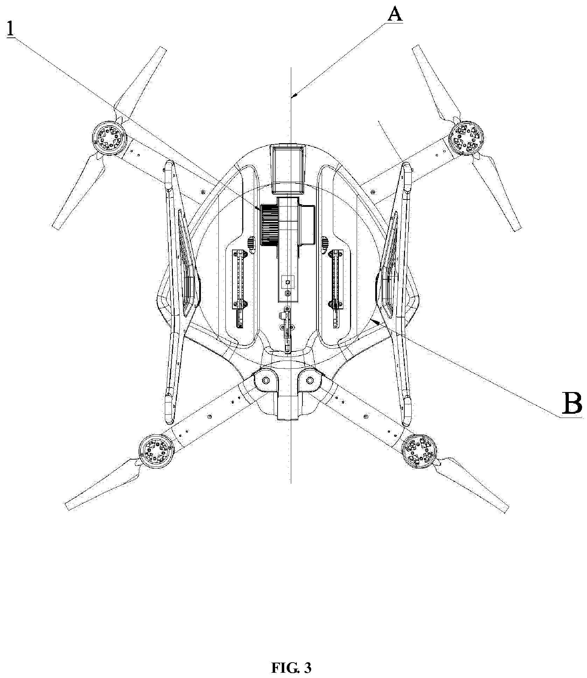

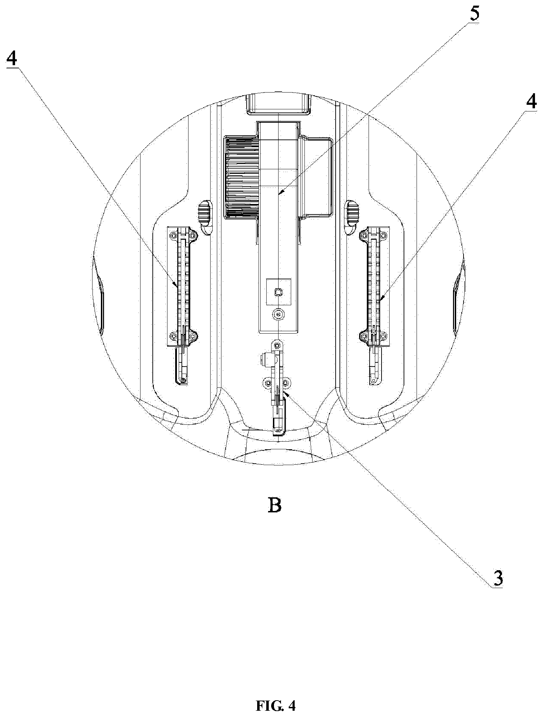

The UAV also comprises a camera which sends images collected to the processor in real time. The processor can transmit the images to a remote user using a remote controller or user terminal. Fishing efficiency is improved by transmitting real-time images of the sonar unit and the fishhook as a feedback. The user can also be allowed to manipulate the UAV manually based on the received images and therefore participate in the whole fishing instance. In other words, the UAV may hover or return according to either received wireless communication or a preset program. As shown in Fig. 2-4, the UAV according to claim 1 in which the above discussed method can be performed comprises a housing 1, a processor, a positioning unit 5, a sonar unit 2, a launching unit 4, a fishhook unit 3 and a battery unit. The housing 1 comprises a top part and a bottom part. A plurality of arms are rotatably connected to the top part of the housing 1. Each arm is equipped with a motor and an airscrew. The processor is located within the housing 1 and is configured to control the positioning unit 5, the sonar unit 2, the launching unit 4, the fishhook unit 3 and the flight of the UAV. The processor is also configured to control the receiving and transmitting of wireless signals.

The positioning unit 5 and the fishhook unit 3 are arranged on the bottom part of the housing along the line "A" which is the axis of symmetry. A via provided on the positioning unit 5 as an entrance for any connecting components is also located on the axis of symmetry. The position on the axis of symmetry allows the force induced by the positioning unit 5 and the fishhook unit 3 to the housing 1 to be distributed uniformly. The size of the fishhook unit 3 is designed small to facilitate deployment of the fishhook. In other embodiments, the fishhook unit 3 is arranged on the border of the housing 1 or an undercarriage to avoid any influence to the deployment of the fishhook. More than one fishhook can be provided on the fishhook unit 3. More than one fishhook unit 3 can be provided on the bottom part of housing 1.

The launching unit 4 comprises a plurality of identical single bodies. The single bodies are distributed uniformly on the bottom part of housing 1. In some embodiments, the number of single bodies can be 2, 4 or 8. Each single body comprises a left part and a right part separated by the axis of symmetry "A". The symmetric configuration improves stability of the UAV since the force applied to the UAV by each launching unit 4 would also be symmetric. Bait for fish can be stored in a storage component hung on the launching unit 4. The storage components are correspondingly arranged on respective hanging areas. The positioning unit 5, sonar unit 2, launching unit 4 and the fishhook unit 3 are arranged on the bottom part of housing 1 altogether in an effort to maintain a balance of weight.

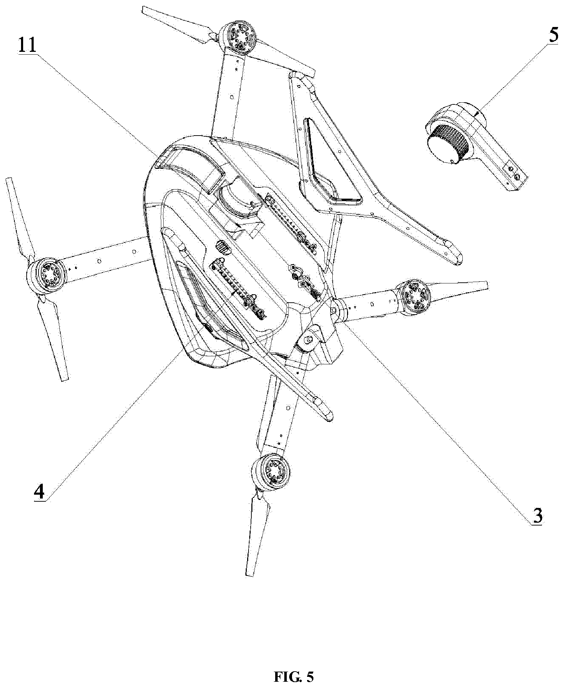

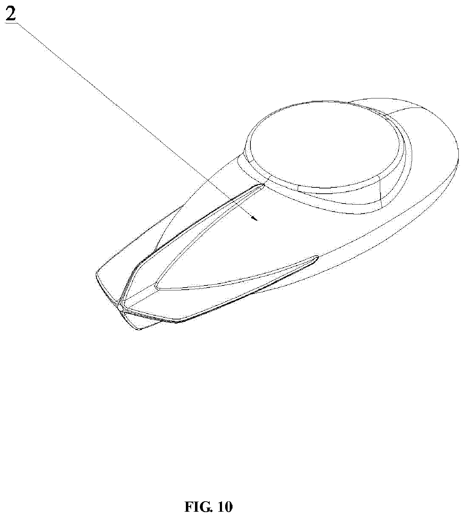

As shown in Fig.5 and 10, the bottom part of the housing 1 comprises a mounting groove 11 formed by an inward depression on the outer wall. The positioning unit 5 is connected to a wire which is also connected to the sonar unit 2. The positioning unit 5 is configured to retract and/or release the wire. Therefore, the positioning unit 5 is mounted outside the housing 1 instead of inside. The positioning unit 5 is detachably mounted in the mounting groove, so that it could be mounted or removed without taking the housing 1 apart. If the wire in the positioning unit 5 get intertwined, repair or replacement of the positioning unit 5 would become necessary. The detachable configuration also facilitates quicker repair or replacement of the positioning unit 5. A fixing block is provided in the mounting groove. A fixing slit is formed on the outer wall of the positioning unit 5 to engage with the fixing block. The detachable configuration is achieved by the fixing block and the fixing slit. In other embodiments, the detachable configuration is achieved by elastic buckles.

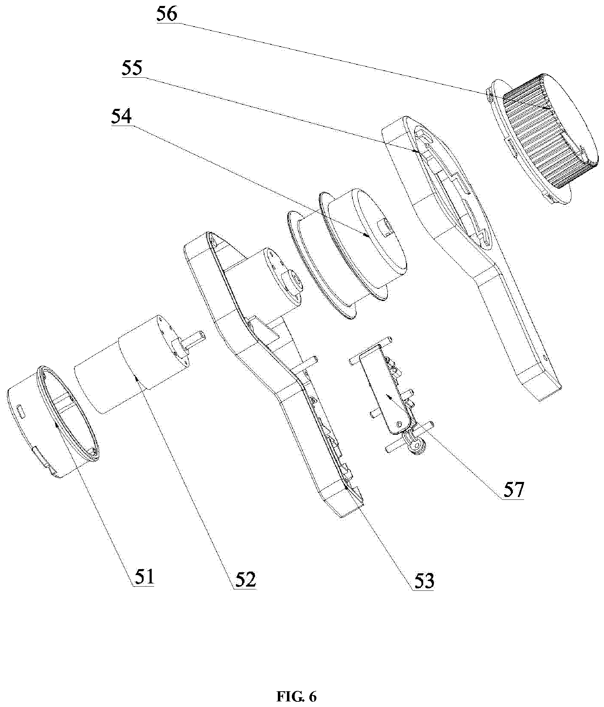

As shown in Fig.6, the positioning unit 5 further comprises a rotator to engage the wire and a power component 52 to drive the rotator. The power component 52 comprises a driving shaft on one of its ends. The positioning unit 5 further comprises a fixing shell 51 and a back shell 53 covering the power component 52. The rotator is arranged outside the back shell 53 and drivably connected to the driving shaft. The fixing shell 51 and the back shell 53 form a cavity to contain the power component 52. Assembly of the rotator, the back shell 53 and the power component 52 in such a fashion reduces the total installing space required. A rim which engages with the end region of the rotator extends from the side of the back shell 53 away from the driving shaft. A front shell is connected to the back shell 53 by that rim. The back shell 53 and the front shell thus form another cavity to contain the rotator. Placing the power component 52 and the rotator in different cavities can avoid interference between the two. Influence to the power component 52 by the wire can also be avoided. The front shell comprises a linking component 55 in connection with the rim and a lid 56 detachably connected to the linking component 55. Resolving the front shell into a linking component 55 and a lid 56 facilitates repair because the rotator can be accessed by simply removing the lid 56. Sealing rings are provided between the fixing shell and the back shell 53, as well as between the back shell 53 and the driving shaft, to provide leakproofness.

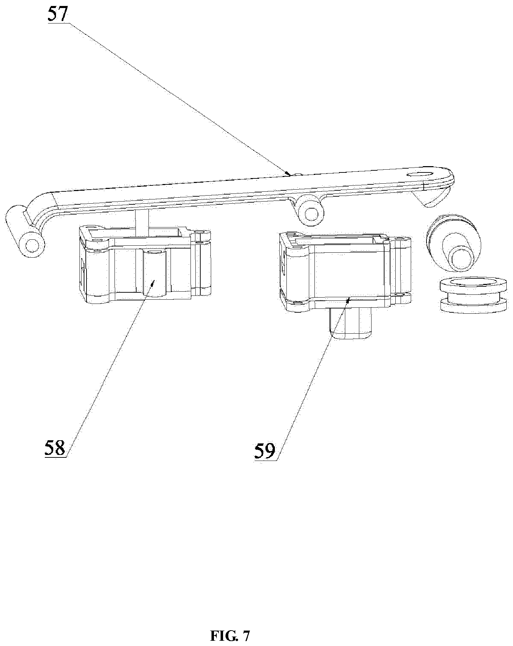

As shown in Fig.7, the positioning unit 5 further comprises a supporting plate 57 to support the wire. A via is opened on the supporting plate 57 to allow the wire to travel through. Displacement of the wire results in a force applied to the supporting plate 57 which keeps the supporting plate 57 in position. However, the tension between the supporting plate 57 and the wire would change due to winds or inertia, leaving the wire in a loosened state. The wire could get twined with itself. Movement of the wire can be severely influenced if this happens. In an embodiment, displacement of the supporting plate 57 resulting from the tension between the supporting plate 57 and the wire becoming less than a predetermined threshold would trigger the first microswitch 58. The triggering of first microswitch 58 would send a signal to the processor. The processor then instructs the power component 52 to stop retracting or to decelerate until the wire is tightened again. In an embodiment, a force sensor can be arranged on the direction of the displacement of the supporting plate 57 to detect the tension between the supporting plate 57 and the wire. The processor instructs the power component 52 to stop retracting or to decelerate if the tension detected by the force sensor has become less than a predetermined threshold.

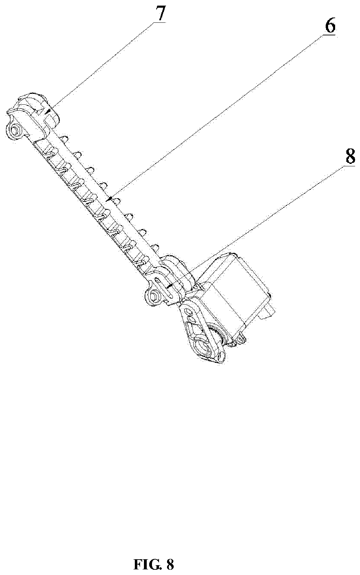

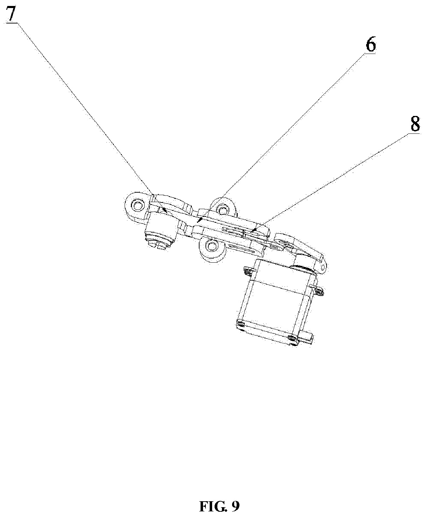

The supporting plate 57 can be arranged horizontally. Since the sonar unit ascends or descends in the vertical direction, the force induced by the wire can be applied perpendicularly to the supporting plate 57 in order to achieve more accurate signals. The supporting plate can be a plate hinged on one side, while the via which engages with the wire can be arranged on the other side.. In an embodiment, the positioning unit 5 comprises a distance sensor which senses the distance between the sonar unit 2 and the housing 1. To ensure the accuracy of the detection of distance, the distance sensor can be provided on the housing 1 alternatively. If the distance between the sonar unit 2 and the housing 1 falls below a predetermined threshold, the processor instructs the power component 52 to stop operation and return the sonar unit 2 from water surface back to the positioning unit 5. In some embodiments, the distance sensor can be a second microswitch. The second microswitch is triggered when it contacts the risen sonar unit 2. The processor instructs the power component 52 to stop operation in response to the trigger of the second microswitch. As shown in Fig.8 and 9, each of the launching unit 4 and the fishhook unit 3 comprises a slide bar 6 and a driving component to actuate the slide bar 6. The driving component drives the slide bar into a displacement based on instructions received from the processor. The displacement of the slide bar 6 causes the bait or the fishhook to be released to the fishing region. In some embodiments, the driving component can be the power component 52. Alternatively, a first sliding groove 8 can be provided on the bottom part of the housing 1. A pivot, which is connected to one end of the slide bar 6, is slidably connected in the first sliding groove 8. The driving component drives the pivot to slide within the first sliding groove 8 and therefore causes the displacement of the slide bar 6. The displacement of the slide bar 6 eventually causes the slide bar 6 to detach from the supporting component 7. The slide bar 6 rotates about the pivot to provide space for a dropping movement of the bait or the fishhook. The driving component comprises a linking shaft, a motor and a swing arm fixed to a driving shaft of the motor. The two ends of the linking shaft are drivably connected to the swing arm and the driving shaft of the motor respectively. In an embodiment, a crank link structure is formed by the linking shaft, the motor and the swing arm. The crank link structure provides stable functioning and allows a relatively large displacement for the slide bar 6 when space is limited. In an embodiment, the bottom part of the housing 1 comprises a second sliding groove in which the supporting component 7 is slidably connected. The driving component actuates the slide bar 6 to slide within the supporting component 7. The slide bar 6 is detached from the supporting component 7 on the movement of the supporting component 7. In other words, the slide bar 6 is driven to rotate around its pivot by moving the supporting component 7. In comparison to actuating the slide bar 6 alone, actuating the supporting component 7 could be performed in more directions without considering interference of the movement direction of the slide bar 6 to its pivot. In an embodiment, the supporting component is rotatably connected to the bottom part of the housing 1. The driving component actuates the supporting component 7 to rotate and detach itself from the slide bar 6. In other words, the slide bar 6 is actuated to rotate around its pivot by rotating the supporting component 7. Rotating the supporting component instead further reduces the occupied space needed. As shown in Fig. 5, a baffle is disposed on the bottom part of the housing 1. A plurality of finlets are provided on the baffle. Each finlet has a cut which engages with the slide bar 6. A through-hole is formed by adjacent finlets and the slide bar 6. Bait can be placed within a storage component which is fixed by the through-holes such that the launching unit 4 may launch the bait stably.

In an embodiment, the launching unit comprises a pedestal which is fixed to bottom part of the housing 1. A first bump and a second bump are arranged on the two sides of the pedestal, respectively. The first sliding groove 8 is arranged on the first bump. The supporting component 7 is arranged on the second bump. The motor is fixed to the inner wall of the bottom part of the housing 1. A via for the swing arm to pass through is provided on the bottom part of the housing 1. In other words, the first bump, the slide bar 6, the second bump and the driving component are arranged in alignment to reduce the total occupied space. Similarly, the finlets can be provided on the pedestal. As shown in Fig.9, the UAV may have difficulties in dragging any captured target if an obstacle impedes the course due to external environments. For example, the fish wire may be twined around an external obstacle when the UAV drags the fishhook to the fishing area, especially when the length of the fish wire is relatively long. In order to secure the retrieving of the UAV, the supporting component is designed according to the invention to be slidably connected to the housing 1 along a direction perpendicular to the slide bar 6. A round corner in contact with the slide bar 6 is provided on the supporting component 7. An elastic component is provided between the supporting component 7 and the housing 1. By using such a configuration, traction resistance force would be applied to the elastic component of the supporting component 7 due to the round corner. If the traction resistance force becomes larger than a predetermined threshold, the elastic component will be pushed to a position in which the supporting component 7 is detached from the slide bar 6, and then the fishhook or bait would be separated from the slide bar 6 to ensure the UAV can be retrieved. In an embodiment, a force sensor can be provided on the supporting component 7. The force sensor detects the force applied to the slide bar 6. If the detected force is larger than a predetermined threshold, the processor of the UAV would instruct the driving component to separate the bait or fishhook from the slide bar 6. Alternatively, the processor can instruct the driving component to separate the bait or fishhook from the slide bar 6 based on the motor load of an arm of the UAV.

The supporting component 7 comprises a base fixed to the bottom part of the housing 1. An indentation is provided in the base which engages with the slide bar 6. The first sliding groove 8 and the supporting component 7 are arranged on the side walls of the indentation. The slide bar 6 is equipped with a fixing component to fix the fishhook. The slide bar 6 and a via provided on the base together fasten the fixing component in place to improve stability of the fishhook on the fishhook unit.

Although certain embodiments have been illustrated and described herein for purposes of description, a wide variety of alternate and/or equivalent embodiments or implementations calculated to achieve the same purposes may be substituted for the embodiments shown and described without departing from the scope of the appended claims.

## Claims

1. An unmanned aerial vehicle (UAV) for fishing, comprising:
a housing (1), said housing having a top part and a bottom part;
a plurality of arms arranged on the top part, each arm having a motor and an airscrew;
a battery unit arranged within the housing (1);
a processor arranged within the housing (1);
a sonar unit (2) for determining a fishing region;
a launching unit (4) for launching bait, said launching unit having a slide bar (6) and a driving component; and
a supporting component (7) arranged on the housing (1) to support the slide bar (6), wherein one end the slide bar (6) is rotatably connected to a pivot, the other end of the slide bar is slidably connected to the supporting component (7), the driving component is to actuate one of the slide bar (6) and the supporting component (7) to separate the slide bar (6) from the supporting component (7), and the slide bar (6) is to rotate about the pivot after separating from the supporting component (7),
said UAV being **characterized in that** the supporting component (7) is slidably connected to the housing (1) in a direction perpendicular to the slide bar (6), a round corner which is in contact with the slide bar (6) is arranged on the supporting component, and an elastic component is arranged between the supporting component (7) and the housing (1).

2. The UAV of claim 1, wherein the bottom part further comprises a first sliding groove (8), the pivot is slidably connected within the first sliding groove (8), and the driving component is to actuate the pivot to slide within the first sliding groove (8) until a displacement of the slide bar causes separation of the slide bar (6) from the supporting component (7).

3. The UAV of claim 2, wherein the driving component further comprises a linking shaft, a motor and a swing arm fixed to the driving shaft of the motor, and the two ends of the linking shaft are connected to the swing arm and the pivot, respectively.

4. The UAV of claim 2, wherein a second sliding groove (8) is arranged on the bottom part, the supporting component (7) is slidably connected within the second sliding groove (8), and the driving component is to actuate the supporting component (7) to slide within the second sliding groove (8) until a displacement of the supporting bar causes separation of the slide bar (6) from the supporting component (7).

5. The UAV of claim 1, wherein the supporting component (7) is rotatably connected to the bottom part, and the driving component is to actuate the supporting component to rotate until a rotation of the supporting component causes separation of the slide bar (6) from the supporting component (7).

6. The UAV of claim 4, wherein the driving component further comprises a linking shaft, a motor and a swing arm fixed to the driving shaft of the motor, and the two ends of the linking shaft are connected to the swing arm and the supporting component, respectively.

7. The UAV of claim 6, wherein the motor is fixed to the inner wall of the bottom part, and a via for the swing arm to pass through is arranged on the bottom part.

8. The UAV of claim 3, wherein the launching unit comprises a pedestal fixed to the bottom part, a first bump and a second bump are arranged on the two sides of the pedestal respectively, the first sliding groove (8) is arranged on the first bump, and the supporting component (7) is arranged on the second bump.

9. The UAV of claim 8, wherein the pedestal comprises a plurality of finlets, and each finlet has a cut which engages with the slide bar (6).

## Patentansprüche

1. Ein unbemanntes Luftfahrzeug (UAV), das beim Fischen verwendet wird, umfassend:
ein Gehäuse (1), wobei das Gehäuse einen oberen Teil und einen unteren Teil aufweist; mehrere Arme, die auf dem oberen Teil angeordnet sind, wobei jeder Arm einen Motor und eine Luftschraube aufweist; eine Batterieeinheit,
die in dem Gehäuse (1) angeordnet ist;
einen im Gehäuse (1) angeordneten Prozessor;
eine Sonareinheit (2) zur Bestimmung einer Fangregion;
eine Starteinheit (4) zum Auslegen der Köder, wobei die Starteinheit eine Gleitschiene (6) und eine Antriebskomponente hat; und
eine Stützkomponente (7), die an dem Gehäuse (1) angeordnet ist, um die Gleitschiene (6) zu tragen,
wobei ein Ende die Gleitschiene (6) drehbar mit einem Drehpunkt verbunden ist,
wobei das andere Ende der Gleitschiene verschiebbar mit der Stützkomponente (7) verbunden ist, die Antriebskomponente eine der Gleitschienen (6) und die Stützkomponente (7) betätigen soll, um die Gleitschiene (6) von der Stützkomponente (7) zu trennen, und wobei die Gleitschiene (6) nach dem Trennen von der Stützkomponente (7) sich um den Drehpunkt drehen soll,
**dadurch gekennzeichnet ist,**
**dass** die Stützkomponente (7) in einer Richtung senkrecht zur Gleitschiene (6) verschiebbar mit dem Gehäuse (1) verbunden ist,
**dass** eine runde Ecke, die mit der Gleitschiene (6) in Kontakt steht, an der Stützkomponente angeordnet ist, und dass eine elastische Komponente zwischen der Stützkomponente (7) und dem Gehäuse (1) angeordnet ist.

2. UAV von Anspruch 1, wobei der untere Teil ferner eine erste Gleitnut (8) umfasst, der Drehzapfen verschiebbar in der ersten Gleitnut (8) verbunden ist, und die Antriebskomponente den Drehpunkt betätigen soll, um innerhalb der ersten Gleitnut (8) zu gleiten, bis eine Verschiebung der Gleitschiene eine Trennung der Gleitschiene (6) von der Stützkomponente (7) bewirkt.

3. UAV von Anspruch 2, wobei die Antriebskomponente ferner eine Verbindungswelle, einen Motor und einen an der Antriebswelle des Motors befestigten Schwenkarm umfasst, und die beiden Enden der Verbindungswelle mit dem Schwenkarm bzw. dem Drehzapfen verbunden sind.

4. UAV von Anspruch 2, wobei eine zweite Gleitnut (8) am unteren Teil angeordnet ist, die Stützkomponente (7) verschiebbar innerhalb der zweiten Gleitnut (8) verbunden ist, und die Antriebskomponente die Stützkomponente betätigen soll, um innerhalb der zweiten Gleitnut (8) zu gleiten, bis eine Verschiebung der Gleitschiene eine Trennung der Gleitschiene (6) von der Stützkomponente (7) bewirkt.

5. UAV von Anspruch 1, wobei die Stützkomponente (7) drehbar mit dem unteren Teil verbunden ist, und die Antriebskomponente die Stützkomponente zum Drehen betätigen soll, bis eine Drehung der Stützkomponente eine Trennung der Gleitschiene (6) von der Stützkomponente (7) bewirkt.

6. UAV von Anspruch 4, wobei die Antriebskomponente ferner eine Verbindungswelle, einen Motor und einen Schwenkarm umfasst, der an der Antriebswelle des Motors befestigt ist, und die zwei Enden der Verbindungswelle mit dem Schwenkarm bzw. der Stützkomponente verbunden sind.

7. UAV von Anspruch 6, wobei der Motor an der Innenwand des unteren Teils befestigt ist, und eine Durchkontaktierung für den Schwenkarm zum Durchgang am unteren Teil angeordnet ist.

8. UAV von Anspruch 3, wobei die Starteinheit einen am unteren Teil befestigten Sockel umfasst, eine erste Erhebung und eine zweite Erhebung an den beiden Seiten des Sockels angeordnet sind, die erste Gleitnut an der ersten Erhebung angeordnet ist, und die Stützkomponente (7) an der zweiten Erhebung angeordnet ist.

9. UAV von Anspruch 8, wobei der Sockel mehrere Finlets umfasst, und jedes Finlet einen Schnitt aufweist, der mit der Gleitschiene (6) in Eingriff steht.

## Revendications

1. Véhicule aérien sans pilote (UAV) pour la pêche, comprenant:
un boîtier (1), ledit boîtier ayant une partie supérieure et une partie inférieure;
une pluralité de bras disposés sur la partie supérieure, chaque bras
ayant un moteur et une vis à air; une unité de batterie disposée à
l'intérieur du boîtier (1);
un processeur disposé à l'intérieur du boîtier (1);
une unité sonar (2) pour déterminer une région de pêche;
une unité de lancement (4) pour lancer l'appât, ladite unité de lancement ayant une barre coulissante (6) et un composant d'entraînement; et
un composant de support (7) disposé sur le boîtier (1) pour supporter la barre coulissante (6), dans lequel une extrémité de la barre coulissante (6) est reliée en rotation à un pivot, l'autre extrémité de la barre coulissante est reliée de façon coulissante à la composant de support (7), le composant d'entraînement doit actionner l'une des barres coulissantes
(6) et le composant de support (7) pour séparer la barre coulissante (6) du composant de support (7), et la barre coulissante (6) doit tourner autour du pivot après s'être séparée du composant de support (7),
ledit drone étant **caractérisé en ce que**
le composant de support (7) est relié de manière coulissante au boîtier (1) dans une direction perpendiculairement à la barre coulissante (6), un coin rond qui est en contact avec la barre coulissante (6) est disposé sur le composant de support, et un composant élastique est disposé entre le composant de support (7) et le boîtier (1).

2. UAV selon la revendication 1, dans lequel la partie inférieure comprend en outre une première rainure coulissante (8), le pivot est connecté de manière coulissante à l'intérieur de la première rainure coulissante (8), et le composant d'entraînement doit actionner le pivot pour coulisser à l'intérieur de la première rainure coulissante (8) jusqu'à ce qu'un déplacement de la barre coulissante provoque la séparation de la barre coulissante (6) du composant de support (7).

3. UAV selon la revendication 2, dans lequel le composant d'entraînement comprend en outre un arbre de liaison, un moteur et un bras oscillant fixés à l'arbre d'entraînement du moteur, et les deux extrémités de l'arbre de liaison sont connectées au bras oscillant et au pivot, respectivement.

4. UAV selon la revendication 2, dans lequel une deuxième rainure coulissante (8) est disposée sur la partie inférieure, le composant de support (7) est connecté de manière coulissante à l'intérieur de la seconde rainure coulissante (8), et le composant d'entraînement doit actionner le composant de support (7) pour coulisser à l'intérieur de la seconde rainure coulissante (8) jusqu'à ce qu'un déplacement de la barre de support provoque la séparation de la barre coulissante (6) du composant de support (7).

5. UAV selon la revendication 1, dans lequel le composant de support (7) est connecté en rotation à la partie inférieure, et le composant d'entraînement doit actionner le composant de support pour tourner jusqu'à ce qu'une rotation du composant de support provoque la séparation de la barre coulissante (6) de le composant de support (7).

6. UAV selon la revendication 4, dans lequel le composant d'entraînement comprend en outre un arbre de liaison, un moteur et un bras oscillant fixés à l'arbre d'entraînement du moteur, et les deux extrémités de l'arbre de liaison sont connectées au bras oscillant et au composant de support, respectivement.

7. UAV selon la revendication 6, dans lequel le moteur est fixé à la paroi intérieure de la partie inférieure, et un via pour le bras oscillant à traverser est disposé sur la partie inférieure.

8. UAV selon la revendication 3, dans lequel l'unité de lancement comprend un socle fixé à la partie inférieure, une première bosse et une seconde bosse sont disposées respectivement sur les deux côtés du socle, la première rainure coulissante (8) est disposée sur la première bosse et le composant de support (7) est disposé sur la deuxième bosse.

9. UAV selon la revendication 8, dans lequel le piédestal comprend une pluralité de finlets, et chaque finlet a une coupe qui s'engage avec la barre coulissante (6).
